# EUROPÄISCHE PATENTSCHRIFT

(11) **EP 3 354 387 B1**
(45) Veröffentlichungstag und Bekanntmachung des Hinweises auf die Patenterteilung: **03.07.2024**
(21) Anmeldenummer: 17000756.1
(22) Anmeldetag: 03.05.2017
(51) Int. Cl.: B23C 3/12, B27D 5/00, B27G 13/00, B23C 5/00, B23Q 35/04, B27L 11/00

(54) **ZERSPANUNGSWERKZEUG**
CHIPPING TOOL
OUTIL D'ENLÈVEMENT DE COPEAUX

(30) Priorität: 25.01.2017 EP 17000141
(43) Veröffentlichungstag der Anmeldung: 01.08.2018
(73) Patentinhaber: Ledermann GmbH & Co. KG, 72160 Horb a. N. (DE)
(72) Erfinder: Galli, Olivier, 71154 Nufringen (DE)
(74) Vertreter: Zurhorst, Stefan

(56) Entgegenhaltungen:
- EP-A1- 3 075 477
- EP-A2- 1 459 859
- EP-A2- 1 992 463
- DE-A1-102009 005 634
- DE-U1-202010 002 437
- DE-U1-202014 104 712
- GB-A- 1 055 892

## Beschreibung

Die Erfindung betrifft ein Zerspanungswerkzeug mit den Merkmalen nach dem Oberbegriff des Anspruchs 1. Ein solches Zerspanungswerkzeug ist aus dem Dokument DE 20 2010 002437 U1 bekannt. Insbesondere in der Holzbearbeitung werden verbreitet drehend angetriebene Zerspanungswerkzeuge eingesetzt, die einen Werkzeuggrundkörper und mindestens eine, im Regelfall mehrere vom Werkzeuggrundkörper separate Schneidplatten mit je einer Schneide umfassen. Der Werkzeuggrundkörper ist mit Aufnahmetaschen versehen, in denen je eine Schneidplatte gehalten ist. Darüber hinaus ist der Werkzeuggrundkörper rückseitig der Aufnahmetaschen mit je einer radial hervorstehenden Erhebung, den sogenannten Stollen versehen. Die rückwärtige Wand der Aufnahmetaschen und die Frontfläche der Stollen bilden zusammen eine durchgehende Stützfläche, an der die einzelnen Schneidplatten mit ihrer jeweiligen Rückseite anliegen und dadurch gegen die auftretenden Schnittkräfte abgestützt sind.

Die Fertigung derartiger Werkzeuggrundkörper ist aufwändig, da wegen der Stollen eine Fertigbearbeitung durch Drehen ausscheidet. Vielmehr muss die Oberflächenkontur des Werkzeuggrundkörpers durch Formfräsen herausgearbeitet werden, wobei insbesondere zwischen den Stollen ein hoher und kostenintensiver Zerspanungsgrad anfällt. Zur Vermeidung von Unwucht ist eine hohe Fertigungsgenauigkeit erforderlich.

Ein weiteres Problem ergibt sich aus der erheblichen Geräuschentwicklung beim Betrieb solcher Zerspanungswerkzeuge, die entsprechende Schallschutzmaßnahmen erforderlich macht.

Die EP 3 075 477 A1 zeigt eine mehrteilige Variante des vorgenannten Werkzeuges mit einem Werkzeuggrundkörper sowie mit mehreren darin eingeschraubten Schneidelementen. Der Werkzeuggrundkörper ist im Wesentlichen zylindrisch und hat folglich die Oberfläche eines Rotationskörpers. Die Schneidelemente setzen sich jeweils aus einem Schneidengrundkörper und einer fest mit dem Schneidengrundkörper verbundenen Schneidplatte zusammen. Die einzelnen Schneidengrundkörper sind derart ausgestaltet, dass sie die jeweiligen Schneidplatten rückwärtig abstützen. Im montierten Zustand stehen sie über die zylindrische Oberfläche des Werkzeuggrundkörpers hervor, sodass sie die weiter oben schon erwähnten Stollen bilden. Der erhöhte Fertigungsaufwand bleibt bestehen und ist hier lediglich vom Werkzeuggrundkörper auf die einzelnen Schneidengrundkörper verschoben. Auch das schon erwähnte Problem der Geräuschentwicklung ist nicht überwunden. Vergleichbare Ausführungen sind noch aus der DE 20 2014 104 712 U1 und aus der DE 10 2009 005 634 A1 bekannt.

Der Erfindung liegt die Aufgabe zugrunde, ein gattungsgemäßes Zerspanungswerkzeug derart weiterzubilden, dass bei verringertem Fertigungsaufwand die Laufruhe verbessert ist.

Diese Aufgabe wird durch ein Zerspanungswerkzeug mit den Merkmalen des Anspruchs 1 gelöst.

Nach der Erfindung ist ein Zerspanungswerkzeug vorgesehen, bei dem der Werkzeuggrundkörper bezüglich der Drehachse zumindest abschnittsweise als Rotationskörper ausgebildet ist. Die mindestens eine Aufnahmetasche ist in die Oberfläche des Rotationskörpers eingearbeitet und weist eine Stützfläche für die Schneidplatte auf, die von der Umfangskontur des Rotationskörpers begrenzt ist. Dabei liegt die Schneidplatte an der Stützfläche der Aufnahmetasche an und ragt mit ihrer Schneide aus der Aufnahmetasche frei und ungestützt über die Außenkontur des Rotationskörpers heraus.

Dort, wo der Werkzeuggrundkörper als Rotationskörper ausgebildet ist, lässt sich dessen Oberfläche leicht durch Drehen herstellen. Fräsarbeiten beschränken sich auf die Einbringung der Aufnahmetaschen für die Schneidplatten. Geometrisch betrachtet ist ein Rotationskörper gebildet, von dessen ansonsten ungestörter, drehend umlaufender Oberfläche sich die Aufnahmetaschen ausschließlich radial nach innen erstrecken, und ohne dass es radial über die ungestörte, drehend umlaufende Oberfläche hervorstehende Teile bzw. Abschnitte des Werkzeuggrundkörpers gibt. Die einzigen Teile des Zerspanungswerkzeuges, welche radial nach außen über die ungestörte, drehend umlaufende Oberfläche des Werkzeuggrundkörpers hervorstehen, sind die Schneidenbereiche der eingesetzten Schneidplatten. Neben dem deutlich verringerten Fertigungsaufwand wurde im Betrieb eine erhebliche Verminderung des Geräuschpegels um mehrere Dezibel im Vergleich zu Referenzwerkzeugen beobachtet.

Gemäß der Erfindung ist die jeweilige Schneidplatte mit der Stützfläche der Aufnahmetasche stoffschlüssig verbunden. Hierdurch ergibt sich eine flächige Befestigung der Schneidplatte mit guter Halte- und Stützwirkung, während der Werkzeuggrundkörper konstruktiv sehr einfach gehalten werden kann. Für die Schneidplatten kommen verschiedene Materialien in Betracht. Bevorzugt ist die Schneide der Schneidplatte aus polykristallinem Diamant mit entsprechend hoher Standzeit gebildet.

Die Oberfläche des Rotationskörpers kann blank gedreht und entsprechend glatt sein. In vorteilhafter Weiterbildung ist auf der Oberfläche des Rotationskörpers eine Oberflächenstruktur zur Reduzierung von Schallemissionen ausgebildet. Eine solche Oberflächenstruktur kann zweckmäßig insbesondere auf einer Umfangsfläche und/oder auf mindestens einer Stirnfläche des Rotationskörpers ausgebildet sein. Als Oberflächenstruktur sind solche Strukturen gemeint, denen die umlaufende Oberfläche des Rotationskörpers zugrunde liegt, und die insbesondere in einem umlaufend rotierenden Prozess hergestellt werden. Dies kann beispielsweise eine Rändelung sein. Zweckmäßig ist die Oberflächenstruktur als eine in Umfangsrichtung des Rotationskörpers verlaufende Rillenstruktur ausgebildet und kann deshalb leicht durch Drehen hergestellt werden.

Die Oberflächenstruktur muss die Oberfläche des Rotationskörpers nicht vollständig bedecken, reicht jedoch vorteilhaft bis unmittelbar an den Rand der Aufnahmetasche heran, wo sie von mindestens einer Wand der Aufnahmetasche geschnitten ist. Als Besonderheit hat sich hier gezeigt, dass dort, wo sich die strukturierte Oberfläche des Rotationskörpers mit einer Aufnahmetasche für eine Schneidplatte schneidet, eine unregelmäßig geformte, wellige Taschenkante entsteht. Es wird vermutet, dass dieser wellige Kantenverlauf als aerodynamischer Turbulator wirkt und zu einem sauberen Strömungsabriss der Luft an der Taschenkante beträgt. Jedenfalls entsteht eine beachtliche Lärmreduzierung.

Alternativ oder zusätzlich kann es zweckmäßig sein, dass eine quer zur Drehrichtung verlaufende Oberflächenkante der Aufnahmetasche mit einer Fase zur Reduzierung von Schallemissionen versehen ist. Hierbei wird ein ähnlicher Wirkmechanismus vermutet, der jedenfalls in gleicher Weise beachtlich zur Lärmreduzierung beiträgt.

Ausführungsbeispiele der Erfindung sind nachfolgend anhand der Zeichnung näher beschrieben. Es zeigen:
- Fig. 1: in einer perspektivischen Ansicht ein erstes Ausführungsbeispiel eines erfindungsgemäßen Zerspanungswerkzeuges mit zylindrischer Grundform, dessen Werkzeuggrundkörper auf der Umfangsfläche und den Stirnflächen als Rotationskörper mit Rillenstruktur und eingearbeiteten Aufnahmetaschen für die Schneidplatten ausgebildet ist,
- Fig. 2: in vergrößerter Detailansicht den Umfangsbereich des Werkzeuggrundkörpers nach Fig. 1 mit Einzelheiten zur Ausgestaltung seiner Aufnahmetaschen,
- Fig. 3: die Anordnung nach Fig. 2 mit eingesetzten Schneidplatten,
- Fig. 4: eine Detailansicht des Zerspanungswerkzeuges nach Fig. 1 im Bereich seiner Stirnfläche mit Einzelheiten zu einer radial und axial offenen Aufnahmetaschen, und
- Fig. 5: in einer perspektivischen Ansicht ein weiteres Ausführungsbeispiel eines erfindungsgemäßen Zerspanungswerkzeuges mit einer nur stirnseitig strukturierten Oberfläche eines Rotationskörpers.

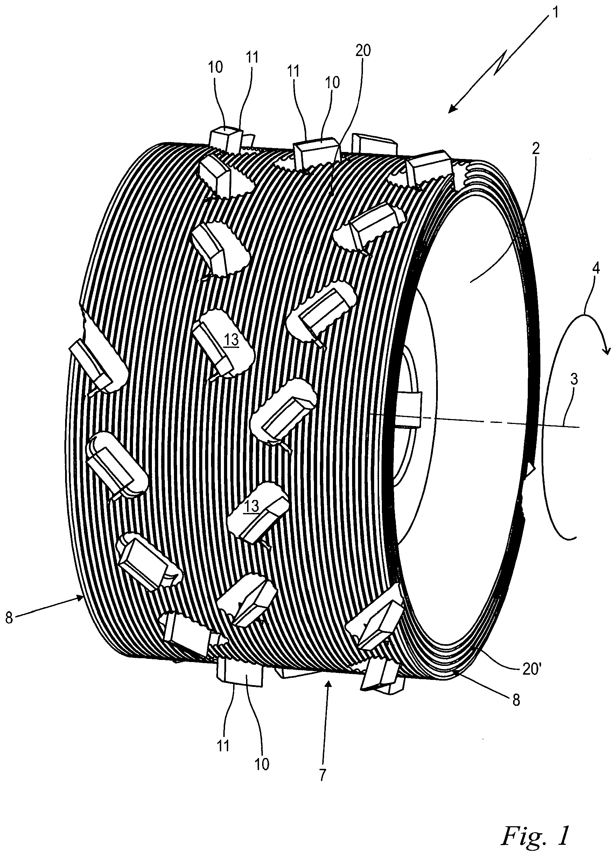

Fig. 1 zeigt in einer perspektivischen Ansicht ein erstes Ausführungsbeispiel eines erfindungsgemäßen Zerspanungswerkzeuges 1 zur spanenden Bearbeitung von Holz oder ähnlichen Werkstoffen. Als ähnliche Werkstoffe sind hier Werkstoffe mit physikalischen und technologischen Eigenschaften gemeint, die denen von Holz ähnlich sind, wie z.B. Kork, Knochen, Kunststoff, Leichtmetalllegierungen, Holzwerkstoffe wie Spanplatten, Holzfaserplatten, Sperrholz usw., und bei denen das Verfahren bei der Bearbeitung und beim Abheben von Spänen oder Teilchen ähnlich ist. Das Zerspanungswerkzeug 1 umfasst einen Werkzeuggrundkörper 2 sowie mindestens eine, hier mehrere Schneidplatten 10. Der Werkzeuggrundkörper 2 ist einteilig aus Stahl gefertigt, kann aber auch aus einem anderen geeigneten Material bestehen. Die Schneidplatten 10 sind separat vom Werkzeuggrundkörper 2 als Einzelteile ausgebildet und am Werkzeuggrundkörper 2 befestigt. Das Zerspanungswerkzeug 1 und sein Werkzeuggrundkörper 2 weisen eine gemeinsame Drehachse 3 auf. Im Betrieb wird das Zerspanungswerkzeug 1 um diese Drehachse 3 in einer Drehrichtung 4 drehend angetrieben, wobei außen liegende Schneiden 11 der Schneidplatten 10 mit einem nicht dargestellten Werkstück in Eingriff gebracht werden und Späne abheben.

Der Werkzeuggrundkörper 2 ist im gezeigten Ausführungsbeispiel im Wesentlichen zylindrisch mit einer Umfangsfläche 7 und zwei axial sich gegenüberliegenden Stirnflächen 8 ausgebildet. Im Rahmen der Erfindung kann aber auch eine Kegelform oder eine andere Form zweckmäßig sein. Jedenfalls stehen die Schneiden 11 in radialer Richtung und/oder in axialer Richtung über die Außenkontur des Werkzeuggrundkörpers 2 hervor, so dass beim Zerspanungsprozess genügend Freiraum zwischen dem Werkstück und der Oberfläche des Werkzeuggrundkörpers 2 verbleibt.

Der Werkzeuggrundkörper 2 ist bezüglich der Drehachse 3 im geometrischen Sinne zumindest abschnittsweise als Rotationskörper 20 ausgebildet. Dies bedeutet mit anderen Worten, dass in diesem Bereich die Oberfläche des Werkzeuggrundkörpers 2 durch eine 360°-Rotation einer Konturlinie um die Drehachse 3 gebildet ist. In die Oberfläche des Rotationskörpers 20 können nach der Erfindung zwar Vertiefungen beispielsweise zur Bildung von Aufnahmetaschen 13 für die Schneidplatten 10 eingearbeitet sein. Allerdings stehen keinerlei Erhebungen des Werkzeuggrundkörpers 2 über die ungestörte Oberfläche des Rotationskörpers 20 hervor. Im gezeigten Ausführungsbeispiel ist der Werkzeuggrundkörper 2 sowohl im Bereich seiner Umfangsfläche 7 als auch im Bereich seiner beiden Stirnflächen 8 vollständig als Rotationskörper 20, 20' ausgebildet. Im Rahmen der Erfindung kann es aber auch zweckmäßig sein, nur eine der beiden Stirnflächen 8, nur einen Teil der Umfangsfläche 7 oder in anderer geeigneter Weise nur einen Abschnitt des Werkzeuggrundkörpers als Rotationskörper 20 auszubilden.

In die Oberfläche des Rotationskörpers 20, 20' sind Aufnahmetaschen 13 für die Schneidplatten 10 eingearbeitet. In je einer Aufnahmetasche 13 ist je eine Schneidplatte 10 derart befestigt, dass sie mit ihrer Schneide 11 aus der Aufnahmetasche 13 über die Außenkontur des Rotationskörpers 20 herausragt. Die Schneiden 11 der Schneidplatten 10 sind bevorzugt aus polykristallinem Diamant (PKD) gebildet. Hierzu kann eine PKD-Schicht auf einen Hartmetallträger aufgesintert sein. Denkbar ist auch, dass es sich um reine PKD-Schneidlinge insbesondere mit einer Stärke zwischen 0,6 mm bis 2,0 mm handelt.

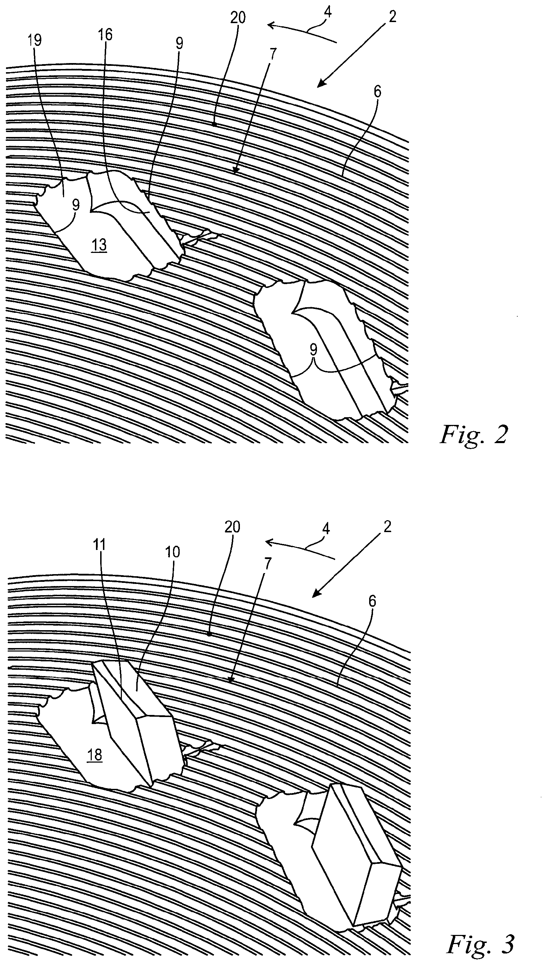

Die Fig. 2 und 3 zeigen in vergrößerter Detailansicht den Werkzeuggrundkörper 2 nach Fig. 1 im Bereich seiner Umfangsfläche 7. Abweichend von den Fig. 1, 3 sind der besseren Übersicht halber in Fig. 2 die Schneidplatten 10 nicht dargestellt. Jedenfalls ist insbesondere in Fig. 2 erkennbar, dass dort Aufnahmetaschen 13 ausgebildet sind, die sich ausgehend von der ungestörten Oberfläche des Rotationskörpers 20 radial nach innen erstrecken. Die Aufnahmetaschen 13 sind von einer umlaufenden Oberflächenkante 9 begrenzt, an welcher die Oberfläche des Rotationskörpers 20 von den Wänden der Aufnahmetasche 13 geschnitten wird. Im bezogen auf die Drehrichtung 4 rückwärtigen Bereich sind in den Aufnahmetaschen 13 Stützflächen 16 ausgebildet, an denen gemäß der Darstellung nach Fig. 3 die Schneidplatten 10 anliegen und befestigt sind. Dies kann eine Schraub- oder Klemmbefestigung sein. Im gezeigten bevorzugten Ausführungsbeispiel sind die Schneidplatten 10 auf die Stützflächen 16 aufgelötet. Im Rahmen der Erfindung kommen außer Löten auch andere stoffschlüssige Verbindungen der Schneidplatten 10 mit ihren Stützflächen 16 wie Kleben oder dergleichen in Betracht.

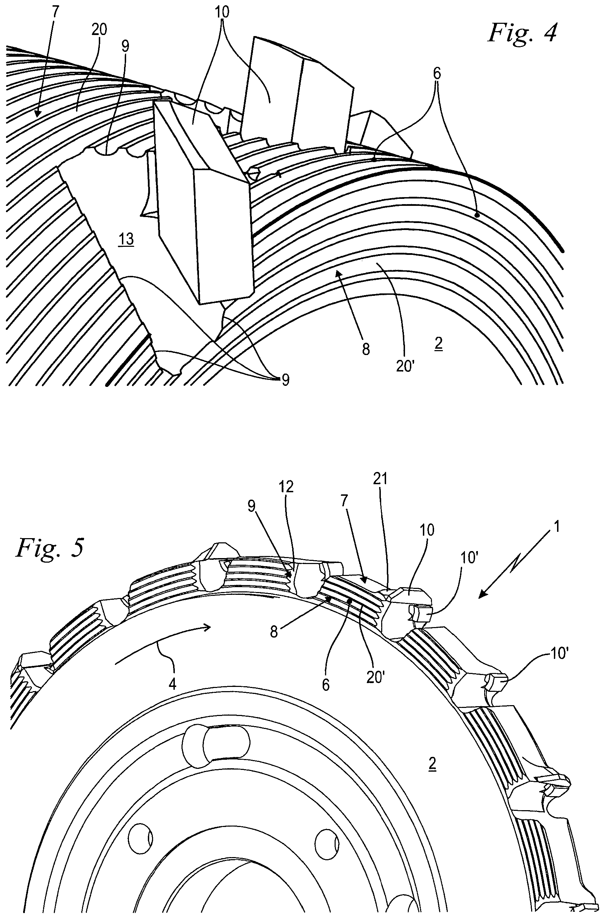

Aus der Darstellung nach Fig. 2 und der geometrischen Definition des Rotationskörpers 20 ergibt sich, dass rückwärtig der Schneidplatten 10 keine in Fig. 5 dargestellte Stollen 21 zur Abstützung vorhanden sind. Vielmehr wird die Stützfläche 16 von der Umfangskontur des Rotationskörpers begrenzt. Mit anderen Worten: Wenn man nun zwei Punkte auf der Oberflächenkante 9 betrachtet, nämlich einen beliebigen Punkt auf dem vorlaufenden Abschnitt der Oberflächenkante 9 und einen dazu korrespondierenden zweiten Punkt, der in der Drehrichtung 4 genau hinter dem ersten Punkt auf der Oberflächenkante 9 im Bereich der Stützfläche 16 liegt, so liegen beide Punkte auf gleicher axialer und radialer Position.

Des Weiteren ist in den Fig. 2, 3 noch erkennbar, dass auf der Oberfläche des Rotationskörpers 20 eine Oberflächenstruktur 6 zur Reduzierung von Schallemissionen ausgebildet ist. Die Oberflächenstruktur kann eine Rändelung oder dergleichen sein und ist im gezeigten bevorzugten Ausführungsbeispiel als eine in Umfangsrichtung des Rotationskörpers 20 verlaufende Rillenstruktur ausgebildet, welche durch Drehen hergestellt ist. Es kann zweckmäßig sein, nur einen Teil des Rotationskörpers 20 mit einer Oberflächenstruktur zu versehen. Hier jedoch weist der Rotationskörper 20 eine vollständig strukturierte Oberfläche auf. Insbesondere reicht die Oberflächenstruktur bis unmittelbar an den Rand bzw. an die Oberflächenkanten 9 der Aufnahmetaschen 13 heran, so dass die Rillenstruktur durch die Aufnahmetaschen 13 unterbrochen wird. Mit anderen Worten schneiden die Wände der Aufnahmetaschen 13 die strukturierte Oberfläche bzw. die Rillenstruktur, in dessen Folge die Oberflächenkanten 9 gezackt bzw. wellig verlaufen und als aerodynamische Turbulatoren zur Geräuschminderung wirken. Es kann aber auch zweckmäßig sein, den Rotationskörper insbesondere im Bereich der Aufnahmetaschen 13 mit einer glatten Oberfläche zu versehen.

Fig. 4 zeigt noch eine Detailansicht des Zerspanungswerkzeuges nach den Fig. 1 bis 3 im Bereich einer seiner Stirnflächen 8. Demnach ist zu erkennen, dass die Aufnahmetaschen 13 nicht nur in radialer Richtung, sondern auch in axialer Richtung offen sein können. Hier jedenfalls ist auch die als Rotationskörper 20' ausgebildete Stirnfläche 8 durch axial nach innen gehende Aufnahmetaschen 13 unter Bildung von Oberflächenkanten 9 unterbrochen. Da auch die als Rotationskörper 20' ausgebildete Stirnfläche 8 mit einer Oberflächenstruktur 6 versehen ist, ergibt sich hier ein vergleichbar welliger bzw. gezackter Verlauf der Oberflächenkanten 9. Die genannten Zusammenhänge sind hier beispielhaft an einem zylindrischen Werkzeuggrundkörper 2 mit einer als Rotationskörper 20 ausgebildeten Umfangsfläche 7 und mit als Rotationskörper 20' ausgebildeten Stirnflächen 8 beschrieben, gelten aber in analoger Weise auch für andere geometrische Grundformen des Werkzeuggrundkörpers 2.

Fig. 5 zeigt in einer perspektivischen Ansicht ein weiteres Ausführungsbeispiel eines erfindungsgemäßen Zerspanungswerkzeuges 1 mit radial hervorstehenden Schneidplatten 10 und axial hervorstehenden Schneidplatten 10'. Hier ist die Umfangsfläche 7 des Werkzeuggrundkörpers 2 nicht als Rotationskörper ausgebildet. Vielmehr sind axial erhaben Stollen 21 vorhanden, die zur rückwärtigen Stützung der radial hervorstehenden Schneidplatten 10 beitragen. Dennoch ist zumindest ein Abschnitt des Werkzeuggrundkörpers 2, nämlich eine Stirnfläche 8, als Rotationskörper 20' ausgeformt, wobei auf der Oberfläche auch dieses Rotationskörpers 20' eine Oberflächenstruktur 6 analog zur Darstellung nach den Fig. 1 bis 4 zur Reduzierung von Schallemissionen ausgebildet ist. Im Rahmen der Erfindung kann dies eigenständig der Fall sein, also ohne die weiter oben beschriebene Eigenschaft, wonach die Stützfläche 16 für die jeweilige Schneidplatte 10, 10' von der Umfangskontur des Rotationskörpers 20 begrenzt sein soll.

In Fig. 5 ist noch erkennbar, dass die Aufnahmetasche 13 im Bereich der Stirnfläche 8 mit einer quer zur Drehrichtung 4 verlaufenden Oberflächenkante 9 ausgebildet ist. Hier ist die Oberflächenstruktur 6 nicht bis unmittelbar an die Aufnahmetasche 13 herangezogen. Vielmehr ist die Oberflächenkante 9 mit einer Fase 12 zur Reduzierung von Schallemissionen versehen. In den übrigen Merkmalen, Eigenschaften und Bezugszeichen stimmt das Ausführungsbeispiel nach Fig. 5 mit demjenigen nach den Fig. 1 bis 4 überein.

## Patentansprüche

1. Zerspanungswerkzeug, umfassend einen Werkzeuggrundkörper (2) und mindestens eine vom Werkzeuggrundkörper (2) separate Schneidplatte (10) mit einer Schneide (11), wobei der Werkzeuggrundkörper (2) eine Drehachse (3) aufweist und im Betrieb des Zerspanungswerkzeuges (1) in einer Drehrichtung (4) um die Drehachse (3) rotiert, und wobei der Werkzeuggrundkörper (2) mit mindestens einer Aufnahmetasche (13) für die Schneidplatte (10) versehen ist,
wobei der Werkzeuggrundkörper (2) bezüglich der Drehachse (3) zumindest abschnittsweise als Rotationskörper (20) ausgebildet ist,
**dadurch gekennzeichnet, dass** die mindestens eine Aufnahmetasche (13) in die Oberfläche des Rotationskörpers (20) eingearbeitet ist und eine von der Umfangskontur des Rotationskörpers (20) begrenzte Stützfläche (16) für die Schneidplatte (10) aufweist, und wobei die Schneidplatte (10) an der Stützfläche (16) der Aufnahmetasche (13) anliegt, mit der Stützfläche (16) der Aufnahmetasche (13) stoffschlüssig verbunden ist, und mit ihrer Schneide (11) aus der Aufnahmetasche (13) über die Außenkontur des Rotationskörpers (20) herausragt.

2. Zerspanungswerkzeug Anspruch 1,
**dadurch gekennzeichnet, dass** die die Schneide (11) der Schneidplatte (10) aus polykristallinem Diamant gebildet ist.

3. Zerspanungswerkzeug nach Anspruch 1 oder 2,
**dadurch gekennzeichnet, dass** auf der Oberfläche des Rotationskörpers (20) eine Oberflächenstruktur (6) zur Reduzierung von Schallemissionen ausgebildet ist.

4. Zerspanungswerkzeug nach Anspruch 3,
**dadurch gekennzeichnet, dass** die Oberflächenstruktur (6) als eine in Umfangsrichtung des Rotationskörpers (20) verlaufende Rillenstruktur ausgebildet ist.

5. Zerspanungswerkzeug nach Anspruch 3 oder 4,
**dadurch gekennzeichnet, dass** die Oberflächenstruktur (6) auf einer Umfangsfläche (7) und/oder auf mindestens einer Stirnfläche (8) des Rotationskörpers (20) ausgebildet ist.

6. Zerspanungswerkzeug nach einem der Ansprüche 3 bis 5,
**dadurch gekennzeichnet, dass** die Oberflächenstruktur (6) bis unmittelbar an den Rand der Aufnahmetasche (13) heranreicht und von mindestens einer Wand (19) der Aufnahmetasche (13) geschnitten ist.

7. Zerspanungswerkzeug nach einem der Ansprüche 3 bis 6,
**dadurch gekennzeichnet, dass** die Aufnahmetasche (13) mit einer quer zur Drehrichtung (4) verlaufenden Oberflächenkante (9) ausgebildet ist, wobei die Oberflächenkante (9) mit einer Fase (12) zur Reduzierung von Schallemissionen versehen ist.

## Claims

1. Cutting tool comprising a main tool body (2) and at least one cutting insert (10), which is separate from the main tool body (2) and has a cutting edge (11),
wherein the main tool body (2) has an axis of rotation (3) and, during operation of the cutting tool (1), rotates in a direction of rotation (4) about the axis of rotation (3), and wherein the main tool body (2) is provided with at least one receiving pocket (13) for the cutting insert (10), wherein the main tool body (2) is designed, at least in part, in the form of a body of rotation (20) in relation to the axis of rotation (3),
**characterized in that** the at least one receiving pocket (13) is made in the surface of the body of rotation (20) and has a supporting surface (16) for the cutting insert (10), the supporting surface being delimited by the circumferential contour of the body of rotation (20), and wherein the cutting insert (10) butts against the supporting surface (16) of the receiving pocket (13), is connected integrally to the supporting surface (16) of the receiving pocket (13) and has its cutting edge (11) projecting out of the receiving pocket (13) beyond the outer contour of the body of rotation (20).

2. Cutting tool according to claim 1,
**characterized in that** the cutting edge (11) of the cutting insert (10) is formed from polycrystalline diamond.

3. Cutting tool according to claim 1 or 2,
**characterized in that** a surface structure (6) is formed on the surface of the body of rotation (20) for the purpose of reducing noise emissions.

4. Cutting tool according to claim 3,
**characterized in that** the surface structure (6) is designed in the form of a groove structure running in the circumferential direction of the body of rotation (20).

5. Cutting tool according to claim 3 or 4,
**characterized in that** the surface structure (6) is formed on a circumferential surface (7) and/or on at least one end surface (8) of the body of rotation (20).

6. Cutting tool according to one of claims 3 to 5,
**characterized in that** the surface structure (6) extends right up to the rim of the receiving pocket (13) and is intersected by at least one wall (19) of the receiving pocket (13).

7. Cutting tool according to one of claims 3 to 6,
**characterized in that** the receiving pocket (13) is formed with a surface edge (9) running transversely in relation to the direction of rotation (4), wherein the surface edge (9) is provided with a chamfer (12) for the purpose of reducing noise emissions.

## Revendications

1. Outil d'usinage par enlèvement de copeaux, comprenant un corps de base d'outil (2) et au moins une plaque de coupe (10) séparée du corps de base d'outil (2) avec un tranchant (11), le corps de base d'outil (2) présentant un axe de rotation (3) et tournant autour de l'axe de rotation (3) dans une direction de rotation (4) pendant le fonctionnement de l'outil d'usinage par enlèvement de copeaux (1), et le corps de base d'outil (2) étant pourvu d'au moins une poche de réception (13) pour la plaque de coupe (10), le corps de base d'outil (2) étant réalisé sous forme de corps de rotation (20) au moins par sections par rapport à l'axe de rotation (3),
**caractérisé en ce que** l'au moins une poche de réception (13) est pratiquée dans la surface du corps de rotation (20) et présente une surface d'appui (16) pour la plaque de coupe (10) délimitée par le contour périphérique du corps de rotation (20), et la plaque de coupe (10) s'appliquant sur la surface d'appui (16) de la poche de réception (13), étant reliée par liaison de matière à la surface d'appui (16) de la poche de réception (13), et dépassant par son tranchant (11) de la poche de réception (13) au-delà du contour extérieur du corps de rotation (20).

2. Outil d'usinage par enlèvement de copeaux revendication 1,
**caractérisé en ce que** le tranchant (11) de la plaque de coupe (10) est formé de diamant polycristallin.

3. Outil d'usinage par enlèvement de copeaux selon la revendication 1 ou 2, **caractérisé en ce qu'**une structure de surface (6) est réalisée sur la surface du corps de rotation (20) pour réduire les émissions sonores.

4. Outil d'usinage par enlèvement de copeaux selon la revendication 3, **caractérisé en ce que** la structure de surface (6) est réalisée sous la forme d'une structure rainurée s'étendant dans la direction périphérique du corps de rotation (20).

5. Outil d'usinage par enlèvement de copeaux selon la revendication 3 ou 4, **caractérisé en ce que** la structure de surface (6) est réalisée sur une surface périphérique (7) et/ou sur au moins une surface frontale (8) du corps de rotation (20).

6. Outil d'usinage par enlèvement de copeaux selon l'une quelconque des revendications 3 à 5,
**caractérisé en ce que** la structure de surface (6) s'étend jusqu'à proximité immédiate du bord de la poche de réception (13) et est coupée par au moins une paroi (19) de la poche de réception (13).

7. Outil d'usinage par enlèvement de copeaux selon l'une quelconque des revendications 3 à 6,
**caractérisé en ce que** la poche de réception (13) est réalisée avec une arête de surface (9) s'étendant transversalement à la direction de rotation (4), l'arête de surface (9) étant munie d'un chanfrein (12) pour réduire les émissions sonores.
